# EUROPEAN PATENT APPLICATION

(11) **EP 1 711 014 A2**
(43) Date of publication of application: **11.10.2006**
(21) Application number: 06251922.8
(22) Date of filing: 05.04.2006
(51) Int. Cl.: H04N 7/18

(54) **Apparatus and method for generating images**

(30) Priority: 05.04.2005 JP 2005108159
(71) Applicant: Nissan Motor Company Limited, Kanagawa-ku Yokohama-shi, Kanagawa 221-0023 (JP)
(72) Inventor: Oizumi, Ken, c/o Nissan Motor Co. Ltd., Yokohama-shi, Kanagawa 221-0023 (JP)
(74) Representative: Holmes, Matthew William

(57) **Abstract**

An image generating device and method for a vehicle that improves the image quality of the output image and provides images that can be better perceived by the driver. A camera allows adjustment of the image output range by manipulation from external to the camera, an image processing device performs manipulation of the camera and image processing of the image acquired by the camera and an image display device displays the image processed by the image processing device. The image output range of the camera can be adjusted corresponding to a signal from image processing device.

## Description

The present invention relates to an apparatus and method for generating images and particularly, but not exclusively, to an apparatus and method, for use with a vehicle, for generating images and displaying images of the vehicle's surroundings in order to facilitate the driver's perception of driving conditions. Aspects of the invention also relate to an image generating device, an image processing device and an image generating method.

In an image generating device for a vehicle of the prior art, such as that shown in Japanese Kokai Patent Application No. 2004-155395, an image is input from a camera (image pickup device) into the input frame buffer of an image processing device, and the data are rearranged in the input frame buffer. The output image is generated in the output frame buffer for displaying to the driver. In this system, depending on the display purpose, the image data in the input frame buffer needed for generating the output image are only part of the image data input to the input frame buffer. That is, in this case, part of the image data in the input frame buffer is extracted for use as the output image.

In such image generating devices of the prior art, when part of the image data in the input frame buffer is cut out as the output image the quality of the usable information is low. Consequently, the output image lacks sufficient resolution, which is undesirable. In order to solve this problem, one may increase the resolution of the camera and the resolution of the input frame buffer so as to increase the data quality of the input frame buffer. However, due to restrictions in the means for connecting the camera and the image processing device (video cable or other image transfer means), no matter how much the resolution of the camera and the resolution of the input frame buffer are increased, the resolution cannot become higher than that determined by the restrictions of the connecting means. As a result, it is not possible to improve the image quality of the output image.

It is an aim of the invention to address this issue. Other aims and advantages of the invention will become apparent from the following description, claims and abstract.

Aspects of the invention therefore provide an apparatus and a method as set out in the appending claims.

According to another aspect of the invention, there is provided an image generating device for a vehicle, comprising an image pickup device operable to capture images around the vehicle and to allow adjustment of an image output range to output the captured images, an image processing device operable to receive and to process portions of the captured images corresponding to the image output range and a display device operable to display an image processed by the image processing device.

In one embodiment the image output range comprises at least two ranges and wherein the image pickup device is arranged to output the captured images in accordance with one of the at least two ranges.

In one embodiment the image pickup device is switchable between a partial image mode and a full image mode.

In one embodiment the image pickup device is arranged to adjust the image output range based on a signal external from the image pickup device.

In one embodiment the image processing device is arranged to define the image output range using coordinates of four or more points.

In one embodiment the image processing device is arranged to define the image output range with a rectangular shape.

In one embodiment the image processing device is arranged to normalize the captured images to a rectangular shape, the rectangular shape being the image for display on the display device.

In one embodiment the image processed by the image processing device is a rectangular shape comprising a combination of a plurality of cut-out images from at least some of the captured images.

In one embodiment said image pickup device is composed of wide-angle cameras for capturing front views, left-side views, right-side views, and rear views of the vehicle; and wherein the image processed by the image processing device is at least one of a bird's-eye view, a front side view, a front lower view, a rear side view and a rear view.

According to another aspect of the invention there is provided an image generating device for a vehicle, comprising image pickup means for capturing images surrounding the vehicle and outputting the images with an adjustable image output range, image processing means for receiving the output images and for image processing of the output images corresponding to the output range and display means for displaying the processed images.

According to a further aspect of the invention there is provided an image generating method for a vehicle, comprising capturing images surrounding the vehicle, outputting each of the captured images with an adjustable image output range, processing the output images corresponding to the image output range and displaying at least one processed image.

In one embodiment the method comprises defining at least two image output ranges and using one of the at least two image output ranges for outputting each of the captured images.

In one embodiment, the method comprises defining part of the captured images as the image output range for outputting each of the captured images.

In one embodiment the method comprises adjusting the image output range corresponding to a signal from external to at least one camera capturing the images.

In one embodiment outputting each of the captured images with the adjustable image output range further comprises outputting each of the captured images with a rectangular shape.

In one embodiment the method comprises normalizing each of the output images to a rectangular shape by image processing corresponding to the image output range.

In one embodiment the method comprises combining each of the rectangular shapes into a single image; and wherein displaying the at least one processed image includes displaying the single image.

In one embodiment processing the output images corresponding to the image output range further comprises combining a plurality of cut-out images from at least some of the captured images in a single rectangular image; and wherein displaying the at least one processed image includes displaying the single rectangular image.

In one embodiment capturing images surrounding the vehicle comprises operating a plurality of wide-angle cameras to capture a front view, a left-side view, a right-side view, and a rear view of the vehicle; and wherein displaying the at least one processed image includes displaying at least one of a bird's-eye view, a front side view, a front lower view, a rear side view and a rear view.

In one embodiment the adjustable image output comprises at least two ranges, the at least two ranges including a partial image range and a full image range.

Embodiments of the invention provide an image generating device for a vehicle and a method that improves the image quality of the output image so that it can provide images that can be better perceived by the driver.

An image generating device for a vehicle can include an image pickup device operable to capture images around the vehicle and to allow adjustment of an image output range to output the captured images, an image processing device operable to receive and to process portions of the captured images corresponding to the image output range, and a display device operable to display an image processed by the image processing device.

An image generating device for a vehicle can also include image pickup means for capturing images surrounding the vehicle and outputting the images with an adjustable image output range, image processing means for receiving the output images and for image processing of the output images corresponding to the output range, and display means for displaying the processed images.

A method for generating an image for a vehicle can include capturing images surrounding the vehicle, outputting each of the captured images with an adjustable image output range, processing the output images corresponding to the image output range, and displaying at least one processed image.

The various aspects, embodiments and alternatives set out in the preceding paragraphs, in the claims and in the following description can be implemented individually or in combination.

The present invention will now be described, by way of example only, with reference to the accompanying drawings in which:
Figure 1 is a block diagram illustrating an image generating device for a vehicle embodying the present invention;
Figure 2 is an overhead plan view illustrating the possible camera positions on a vehicle;
Figure 3 includes a diagram (A) illustrating the acquired image plane of the camera; and a diagram (B) illustrating the state when the image transfer object region is normalized to the resolution of the image transfer means;
Figure 4 is a diagram illustrating the case when image transformation is performed using a plurality of cameras;
Figure 5 illustrates a breakdown of the view images shown in Figure 4; and
Figure 6 illustrates the state of normalization to rectangular shapes of a pentagonal shape (A) and a trapezoidal shape (B).

In the drawings, as far as possible, like reference numerals indicate like parts.

In the following, an explanation will be given regarding the various embodiments of the present invention with reference to the attached figures. An image generating device and method can incorporate generally an image pickup device in which the image output range is adjusted by manipulation from the outside, an image processing device that performs the manipulation of the image pickup device and performs image processing of the image acquired from the image pickup device, and a display device that displays the image processed by the image processing device. The image output range from the image pickup device can be adjusted corresponding to a signal from the image processing device as described in more detail hereinafter.

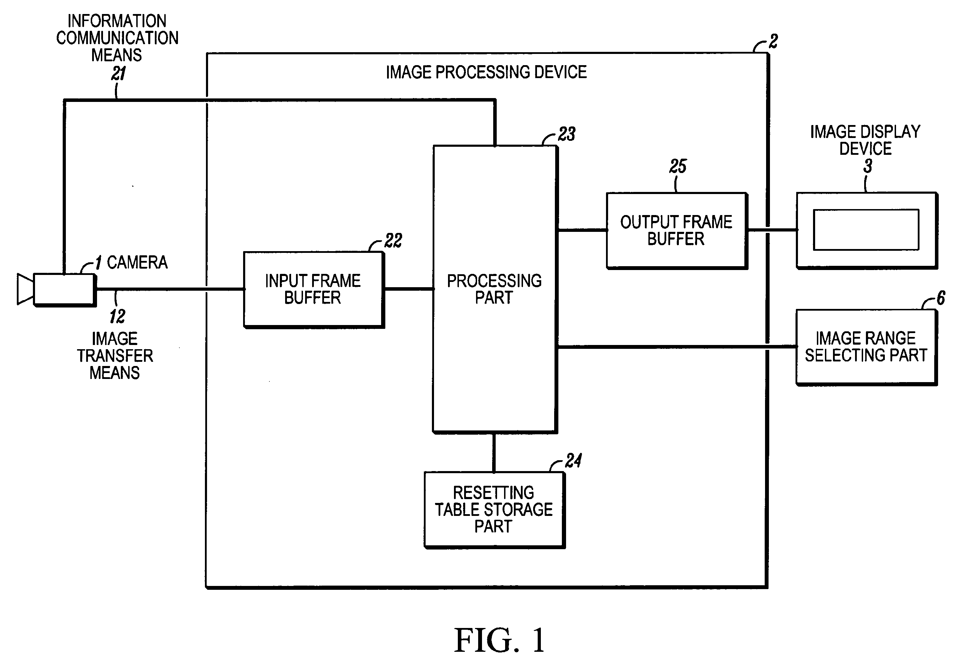

One embodiment is now described with initial reference to Figure 1, which is a block diagram illustrating the make-up of one image generating device for a vehicle. In Figure 1, shown are an electronic camera 1, an image processing device 2, an image display device 3 and an image transfer means 12, such as a video cable or a wireless means, for connecting camera 1 and image processing device 2. Also shown are an input frame buffer 22, an image processing part 23, a resetting table storage part 24, an output frame buffer 25 and an information communication means 21, such as communication cable or wireless means, for connecting image processing part 23 of image processing device 2 and camera 1. Finally, an image range selecting part 6 is shown. Each of these components is discussed in more detail hereinafter.

The camera 1 is connected via image transfer means 12 to image processing device 2. The image (image signal) acquired by camera 1 is transferred by image transfer means 12 to image processing device 2. The image processed by image processing device 2 is transferred to image display device 3 for display to the driver of the vehicle.

In the present embodiment, camera 1 is not only connected to image transfer means 12, but also via information communication means 21 to image processing device 2. Image processing device 2 uses information communication means 21 to assign the image transfer scheme to camera 1 as discussed below.

Image range selecting part 6 selects the part of the surroundings of the vehicle to inform the driver of driving conditions on the front side, left/right sides and the rear side of the vehicle. The image range selecting part 6 may include a touch coordinate detection mechanism. Such a mechanism incorporates, for example, electrodes arranged in a matrix in the display screen of display device 3. The resistance varies corresponding to the touched location with respect to the electrodes in a known fashion, so that the display coordinates of the display screen of display device 3 are detected. Although not shown, a dedicated selection switch for each of the peripheral areas of the vehicle could be used either alternatively or in conjunction with the touch coordinate detection mechanism. By manipulation from the driver, image range selecting part 6 outputs to the processing part 23 the selected area information regarding the part of the surroundings of the vehicle desired by the driver.

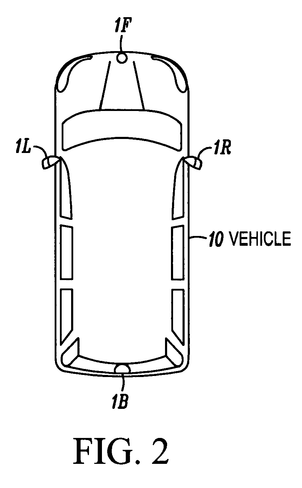

As shown in Figure 2, camera 1 is composed of front camera 1F mounted on the front side of a vehicle 10, rear camera 1B mounted on the rear portion of the vehicle 10, right-side camera 1R mounted on the right door mirror of the vehicle 10 and left-side camera 1L mounted on the left door mirror on the left side of vehicle 10. The front camera 1F, rear camera 1B, right-side camera 1R and left-side camera 1L are preferably so-called wide-angle cameras with an optical design affording a viewing angle of 180°. The front camera 1F, rear camera 1B, right-side camera 1R and left-side camera 1L take pictures to produce, or capture, front camera images, rear camera images, right-side camera images and left-side camera images, respectively, preferably at the same time. As a result, the device preferably produces images completely surrounding the vehicle. Of course, the location of each camera can be adjusted based upon the cameras used and upon the vehicle type to produce the desired images.

Here, for example, the left-side camera images taken by left-side camera 1L become images of the left side of the vehicle 10 body and the areas around the tires, and the rear camera images taken by rear camera 1B become the images containing the rear of the vehicle 10 body, white parking lines, and a neighboring vehicle parked next to the driver's vehicle. The front camera, rear camera, right-side camera, and left-side camera images are output to processing part 23. For simplicity, camera 1 will be used hereinafter to reflect the image pickup devices of the present invention, regardless of the number of such devices.

Image display device 2 displays the processed images taken by camera 1, and in accordance with the manipulations from the driver the state of detected obstacles, etc., a bird's-eye view showing all of the vehicle's surroundings or an image that includes part of the surroundings is displayed.

Processing part 23 can include, for example, a microprocessor coupled to a memory or a standard microcontroller with on-board memory as is known in the art. Processing part 23 acquires plural camera images captured by camera 1. By performing prescribed image processing, a bird's-eye view showing the entire surroundings of the vehicle is formed. Processing part 23 contains a look-up table that records the corresponding relationship between the plurality of input camera images and the output bird's-eye view pre-stored in it. For processing part 24, since the plurality of camera images are input from camera 1, the camera images are stored in the prescribed input memories. By means of processing part 23, the stored camera images are read in units of pixels according to the look-up table, and are stored in the output memory. As a result, in the output memory, the required image regions are cut out from the front camera, rear camera, right-side camera, and left-side camera images to form a panoramic bird's-eye view. Then, after processing part 23 finishes forming the bird's-eye view according to the look-up table, the bird's-eye view is output to output frame buffer 25.

The bird's-eye view formed by the processing part 23 contains the four types of the camera images, that is, the images obtained by extracting portions near the left front tire from the left-side camera image, the image obtained by cutting at an angle of about 120° from the rear camera image, etc., which are combined at a single point above the vehicle. Such a bird's-eye view can be used by the driver to observe his surroundings as though it were possible to view from a point above vehicle 10.

Next, additional details of the operation of camera 1 are discussed. Camera 1 can obtain images with a resolution higher than that of the image that can be transferred by image transfer means 12. Here, in order to simplify the explanation, it is assumed that an image comprising 1280 pixels in the horizontal direction and 960 pixels in the vertical direction can be acquired. The image buffer inside camera 1 is called acquired image plane.

Camera 1 outputs the image via image transfer means 12. As explained above, image transfer means 12 handles images with a resolution of 640 pixels in the horizontal direction and 480 pixels in the vertical direction. Thus, camera 1 processes the acquired images to the resolution of image transfer means 12 and then outputs the images.

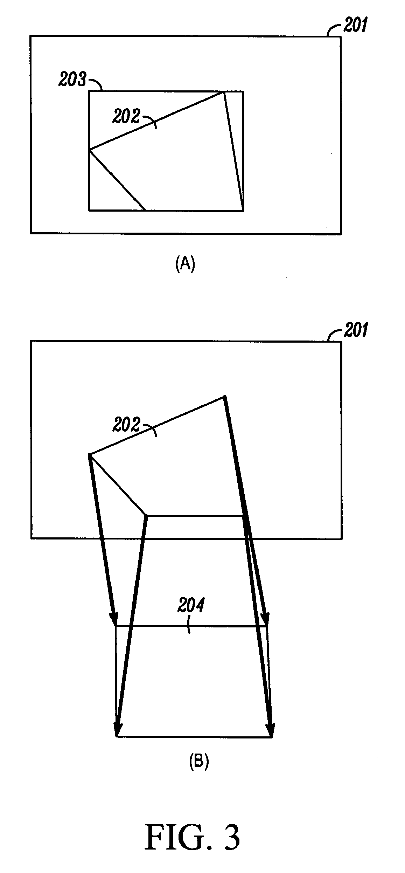

Camera 1 includes image processing means. In Figure 3, (A) is a diagram illustrating the acquired image plane of the camera. Shown in (A) are the acquired image plane 201 of camera 1, the image transfer object region 202 set inside acquired image plane 201 and the minimum rectangular range 203 containing image transfer object region 202. As can be seen, camera 1 sets image transfer object region 202 inside acquired image plane 201 of camera 1. The image transfer object region 202 is defined by the coordinates of the four vertices.

In Figure 3, (B) is a diagram illustrating the state of normalization of image transfer object region 202 to the resolution of image transfer means 12. Shown in (B) is a rectangular region after normalization 204 to enable transfer by image transfer means 12. As shown, camera 1 normalizes image transfer object region 202 to the resolution of image transfer means 12 and generates transferable rectangular region 204 with image transfer means 12.

Here, consider the case when the coordinates of acquired image plane 201 (x_cam, y_cam) on acquired image plane 201 and the coordinates after normalization (x_trans, y_trans) in rectangular region 204 are set. The normalization function fr(u) with (x_trans, y_trans) = fr(x_cam, y_cam) is defined where u is an independent variable. The normalization function fr(u) can be determined from the resolution of camera 1, the resolution of image transfer means 12 and the coordinates of the four points on acquired image plane 201 that define image transfer object region 202. Also, inverse function fri(v) of normalization function fr(u) is defined where v=fr(u) with (x_cam, y_cam) = fri (x_trans, y_trans).

Camera 1 takes the image acquired by normalizing image transfer object region 202 in acquired image plane 201 to match the resolution of image transfer means 12 as the image output of camera 1, and outputs it using image transfer means 12.

Camera 1 uses information communication means 21 from the peripheral device (image processing device 2 in this embodiment) to specify the resolution of camera 1, the resolution of image transfer means 12 and the coordinates of the four points on acquired image plane 201 that define image transfer object region 202 so as to adjust the output image region (image output range, image transmission range). As a practical matter, because the resolution of camera 1 and the resolution of image transfer means 12 are usually fixed and cannot be adjusted, the values assigned from the peripheral device may be only the coordinates of the four points on acquired image plane 201 that define image transfer object region 202. Also, although the normalization function is complicated, even when image transfer object region 202 has four or more apexes, the same method can be adopted to perform treatment. In this embodiment, the explanation concerns the method that assigns the four points. However, other assignment schemes may also be adopted. This will be explained below.

For image transfer object region 202 or the like, the function for normalizing a non-rectangular region to a shape (e.g., a rectangular shape 204) that can be transferred by image transfer means 12 is more complicated than the function that normalizes one rectangular region to another rectangular region. In order to perform the normalization process with a simpler and less expensive circuit or central processing unit (CPU), the minimum rectangular region 203 that will contain image transfer object region 202 is set as the transfer region when image transfer object region 202 is assigned, and it is normalized for transfer. As a result, the number of computations required for normalizing the region can be reduced.

Also, between camera 1 and the peripheral device, certain types of the patterns of image transfer object region 202 are defined beforehand, and the pattern number is assigned. This scheme is effective for increasing the operation speed and reducing costs because the fixed normalization treatment circuits are preset in camera 1 and image processing device 2. Also, because only the pattern number is assigned, it is possible to reduce the information quality received by camera 1 through information communication means 21 and to reduce the cost.

No matter what scheme is adopted for camera 1 and the peripheral device, it is important to know image transfer object region 202 and the accompanying normalization function. As long as the normalization function is known, it is possible to use the normalized image to access the data in image transfer object region 202 on acquired image plane 201 of camera 1.

The data sent via image transfer means 12 is next defined. The image transfer means 12 includes the concepts of a data transfer format and a transfer means, such as a cable, wireless means or the like for realizing the transfer. Here, the transmission format and transfer means allow the transmission of images each with resolution of 640 pixels in the horizontal direction and 480 pixels in the vertical direction and having 24 bits of color at a rate of 30 images/sec. Also, in order to simplify the explanation, only a simple example is presented. However, when it is used in an actual system, the NTSC system or another standard format may be used. The image taken by camera 1 is output in a format that allows transfer by image transfer means 12.

Next, a description is given regarding the operation of image processing device 2. The image processing device 2 has input frame buffer 22, output frame buffer 25, resetting table storage part 24 and image processing part 23. The input frame buffer 22 is of sufficient size for obtaining the image data sent through image transfer means 12. In this embodiment, it is matched to the resolution of image transfer means 12 and is of such size that it can hold 24-bit color data with 640 pixels in the horizontal direction and 480 pixels in the vertical direction. Output frame buffer 25 depends on the specific system. However, in the present embodiment, it is of the type that can hold 24-bit color data with 640 pixels in the horizontal direction and 480 pixels in the vertical direction. For both input and output, the data in input frame buffer 22 and output frame buffer 25 use x, y coordinates as an index. In this manner, it is possible to access any of the pixel data where the pixel data denote color information.

According to the contents of resetting table storage part 24, image processing part 23 copies the data in input frame buffer 22 and generates the data for output frame buffer 25. The resetting table storage part 24 holds the data corresponding to the pixels in output frame buffer 25. In this embodiment, the data comprise 640 pixels in the horizontal direction and 480 pixels in the vertical direction, and it is possible to access any of the pixel data. Specifically, x, y coordinates are used as an index so that the data are identical to the data in input frame buffer 22 and output frame buffer 25. The pixels represented by (x, y) in output frame buffer 25 correspond to the (x, y) data in resetting table storage part 24. All of the data in resetting table storage part 24 have the coordinates of acquired image plane 201 of camera 1 (in the case of the present embodiment, 1280 pixels in the horizontal direction and 960 pixels in the vertical direction).

Here, by surveying resetting table storage part 24, image processing device 2 can know the range of acquired image plane 201 of camera 1 that is registered in resetting table storage part 24. The image processing device 2 sets the four points on acquired image plane 201 such that the registered range is contained. The coordinates of the four points are transmitted to camera 1 to assign the image output range using information communication means 21. Also, the normalization function fr(u) explained with reference to the operation of camera 1 discussed previously is computed. As far as setting the image output range and computing the normalization function are concerned, processing is not required for each cycle. Instead, computations are performed at the time that resetting table storage part 24 is set, and the results are stored in the memory of resetting table storage part 24.

The procedure for the generation of data for output frame buffer 25 by image processing part 23 will be explained below.

When image processing part 23 sets the color information of the (x1, y1) pixels in output frame buffer 25, first the (x1, y1) data in resetting table storage part 24 is accessed to obtain their values. Because the coordinates of acquired image plane 201 of camera 1 are held in the data in resetting table storage part 24, image processing part 23 can obtain the coordinates (x_cam1, y_cam1) of acquired image plane 201 of camera 1. From these coordinates, the normalization function fr(u) (where u represents the independent variable) is used to obtain the normalized coordinates (x_reg1, y_reg1). Thus, (x_reg1, y_reg1) = fr (x_cam1, y_cam1). The normalized image is acquired in input frame buffer 22, and the pixel data of the coordinates (x_cam1, y_cam1) of acquired image plane 201 can be acquired by accessing (x_reg1, y_reg1) in input frame buffer 22. The image processing part 23 acquires the color information stored in (x_reg1, y_reg1) in input frame buffer 22, and the acquired color information is the (x1, y1) data of output frame buffer 25.

Once this process is performed on all of the pixels in output frame buffer 25, the generation of the data of output frame buffer 25 comes to an end.

The image processing device 2 sends the contents of input frame buffer 22 generated by the aforementioned process to image display device 3 for display to the driver. This process is performed at a rate of 30 cycles per second according to the present embodiment. The images acquired by camera 1 are processed by image processing device 2 and are consecutively displayed as moving pictures on image display device 3.

With the scheme described above, image processing device 2 can use camera 1 with a resolution higher than that of image transfer means 12, and it can acquire only the range required for processing by means of image transfer means 12. Consequently, it can present the images with higher a resolution and better visibility than those realized with a device of the prior art.

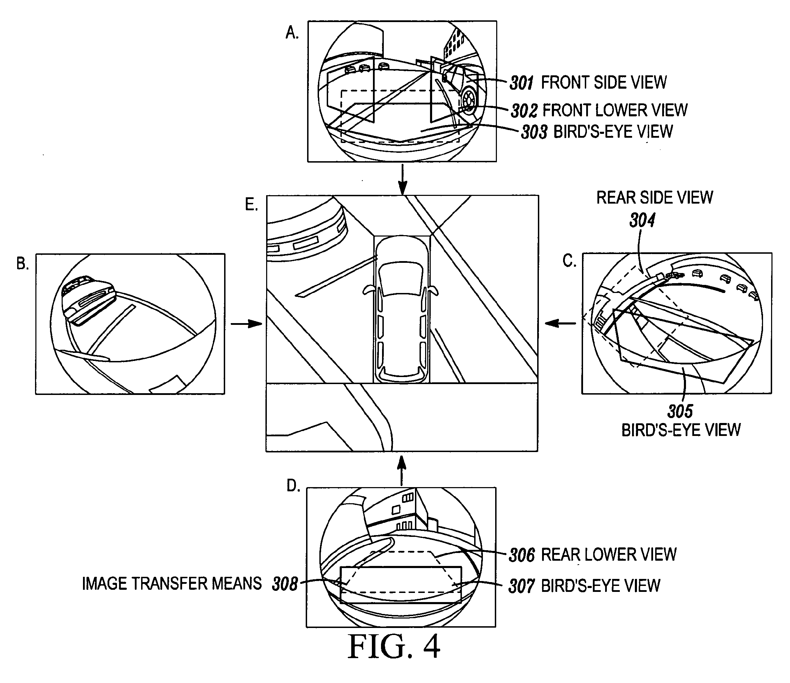

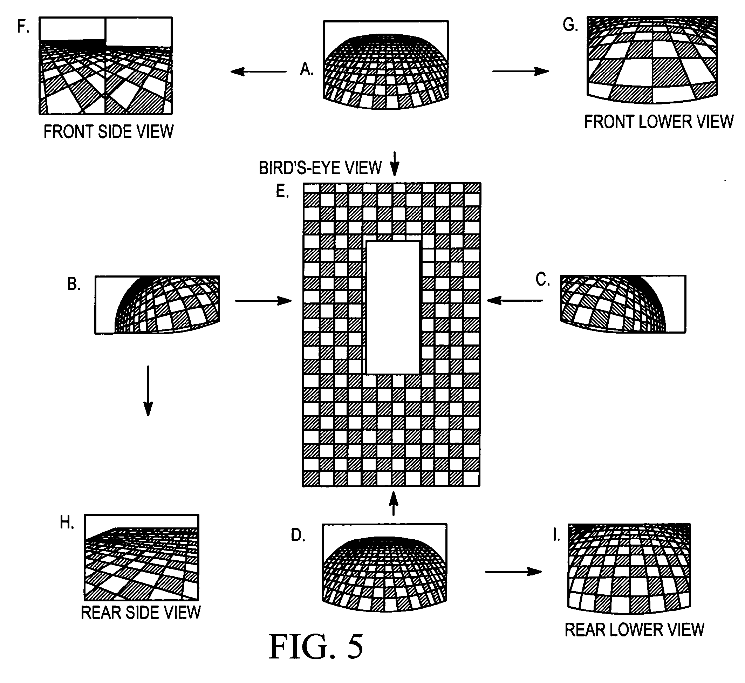

Image transformation using the scheme of the present embodiment shown in Figure 4 will be explained below. Figures 4 and 5 illustrate the case when four cameras 1F, 1B, 1L, 1R are used to perform image transformation. In Figure 4, (A)-(D) show the images taken by the various cameras. That is, in Figure 3, (A) shows the view in front of the vehicle taken by camera 1F; (B) shows the left-side view taken by camera 1L; (C) shows the right-side view taken by camera 1R; and (D) shows the rear view taken by camera 1B. Also in Figure 4, (E) shows the image obtained by merging the images taken by the plurality of cameras after transformation. The image (A) includes front side view 301, front lower view 302 and bird's-eye view 303. The image (C) includes rear side view 304 and bird's-eye view 305. The image (D) includes rear lower view 306, bird's-eye view 307 and the image transfer region 308.

The camera images are pictures that contain blank portions. For the transformed image (E), the required parts are parts of the camera image (part of the ground).

The explanation will refer to rear camera image (D) as an example. Of the rear camera image (D), the range required for transformation to form the transformed image (E) is image transfer region 308. As a result, it is possible to use the bandwidth that transfers all of the camera images (such as (D)) in the prior art to transfer only the range required for transformation (image transfer region 308), so that it is possible to transmit the image at a higher resolution to image processing device 2. As the image before processing is finer, the resolution of the image generated by image processing device 2 is higher, and the obtained image can be more easily viewed.

The camera images (D) are conventional rear view pictures, so that when the rear view images are provided to the driver, all of the camera images are used as the transfer range as they are transferred to image processing device 2 to be shown to the driver. As shown in this case, when only two types of processing are performed, two modes are used as camera image transfer modes, that is, the mode of complete transfer and the mode of transferring image transfer region 308 as the range required for transformation. As needed, switching can be performed between them, so that the image quality of the displayed image can be improved with a simple constitution. For additional details of generating the bird's-eye view, the reader is referred to Japanese Kokai Patent Application No. 2004-48621.

As explained above, the image generating device for a vehicle in this embodiment comprises the following parts that can be used in a method for generating images. First, camera 1 (one or more image pickup devices) allows adjustment of the image output range by manipulation from the outside, such as a signal from image processing device 2. Image processing device 2 manipulates camera 1 and processing of the image acquired by camera 1, and image display device 3 displays the image processed by image processing device 2. More specifically, corresponding to a signal from image processing device 2, the image output range from camera 1 is adjusted. Camera 1 acquires and outputs images, image processing device 2 adjusts the image output range of camera 1 and processes the images acquired by camera 1, and image display device 3 displays the images processed by image processing device 2.

Because the image output range of camera 1 can be adjusted corresponding to the contents of the image processing, the bandwidth of image transfer means 12 that connects image processing device 2 and camera 1 can be used effectively, the image quality of the output image is improved, and the image can be better perceived by the driver.

Also, image processing device 2 defines the image output range of camera 1 by assigning the coordinates of four or more points. As a result, it is possible to assign the camera image output range matched to the contents of the image processing, to improve the image quality of the output image, and to provide an image that can be better perceived by the driver.

Image processing device 2 can assign the image output range of camera 1 with a rectangular shape. As a result, the amount of internal processing by camera 1 can be reduced, and the cost can be reduced.

Also, image processing device 2 normalizes the image output range of camera 1 to a rectangular shape for output to camera 1. As a result, it is possible to make effective use of conventional image transfer means 12, to improve the image quality of the presented image, and to provide images that can be better perceived by the driver.

Also, the image output range is defined beforehand in camera 1, and image processing device 2 outputs to camera 1 the signal corresponding to the image output range of camera 1. As a result, the image output range is defined as a certain type beforehand, and, by appropriate selection from the possible types, it is possible to improve the communication information quality from image processing device 2 to camera 1, it is possible to perform processing with a simpler constitution, and it is possible to reduce the cost.

The image output range of camera 1 can be changed by image processing device 2 switching between part of the image and the entirety of the image. In this way, by switching the image output range of camera 1 between the range of the view of the ground and the entire image, a device appropriate for monitoring devices for automobiles can be obtained at lower cost.

There is preferably a plurality of cameras 1, and the image processing device 2 can adjust the signals to be sent to the plurality of cameras 1 corresponding to the image displayed on image display device 3. As a result, in a system having a plurality of cameras 1, it is possible to improve the image quality of the output image and to provide images that can be better perceived by the driver.

The resolution of camera 1 is higher than the resolution (frequency characteristics) restricted by image transfer means 12 that connects camera 1 and image processing device 2. As a result, it is possible to select a less expensive image transfer means, so that it is possible to reduce the cost.

Other embodiments are, of course, possible. In the following, an explanation will be given regarding an embodiment in which the image output range cut from the wide-angle camera corresponds to the displayed image.

Figures 4 and 5 illustrate images useful in this embodiment. The camera images (A)-(D) shown in Figure 4 correspond to the images (A)-(D) shown in Figure 5. The bird's-eye view (E) shown in Figure 4 corresponds to the image (E) shown in Figure 5. In addition to the bird's-eye view (E), Figure 5 also shows the following: front side view (F), front lower view (G), rear side view (H) and rear lower view (I). In the following, an explanation will be given regarding the images (E), (F), (G), (H), (I) that represent examples of the range for cutting from the view of the wide-angle camera.

When the bird's-eye view (E) of Figure 5 is displayed, the ranges of bird's-eye view 303, bird's-eye view 305 and bird's-eye view 307 in the camera images (A), (C) and (D), respectively, of Figure 4 are cut out, and processing is performed by the image processing device 2 for display on image display device 3. Here, as the cutting ranges from the view of the wide-angle camera, the lower portion of the image (bird's-eye view 303) is cut out from the front wide-angle camera image (A), the lower portion of the image is cut out obliquely (bird's-eye view 305) from the side wide-angle camera image (C), and the lower portion of the image (bird's-eye view 307) is cut out from the rear wide-angle camera image (D). The ranges cut out in this way are a part of the wide-angle camera view, and it is possible to send the necessary information with a reduced number of pixels to image processing device 2.

When the front side view (F) of Figure 5 is displayed, the range of cutting from the front wide-angle camera image (A) of Figure 4 is front side view 301.

When the front lower view (G) of Figure 5 is displayed, the range cut from the front wide-angle camera image (A) of Figure 4 is taken as bird's-eye view 303.

When the rear side view (H) of Figure 5 is displayed, the range cut from the side wide-angle camera image (C) of Figure 4 is taken as rear side image 304.

When the rear lower view (I) of Figure 5 is displayed, the range cut from the rear wide-angle camera image (D) in Figure 4 is taken as rear lower view 306.

As a result, by adjusting the cutting range corresponding to the displayed image, it is possible to send the necessary information with a reduced number of pixels to image processing device 2.

Here, the image output range for cutting out the output image from the camera is defined inside the camera beforehand. The signal assigning the type of the image output range is transmitted, so that the image output range is adjusted. In this way, it is possible to simplify the signal from image processing part 23.

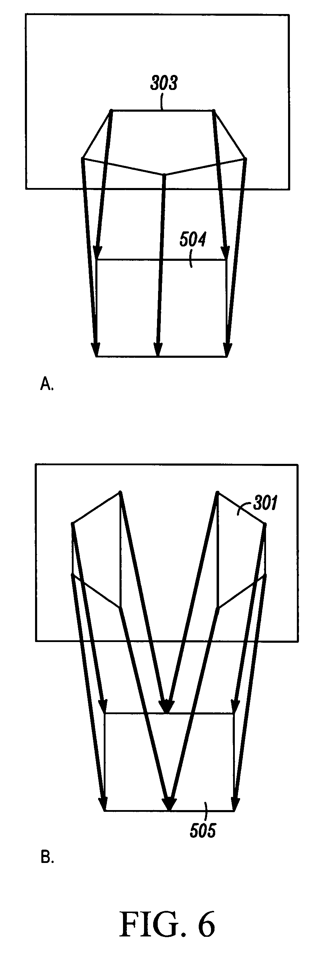

The shape of the cut image can be any of the following shapes. For example, as described with reference to Figure 6, for the pentagonal shape of bird's-eye view 303 and for the trapezoidal shape of front side view 301, or a combination of these two regions, performing the normalization process can produce the rectangular shapes shown in (A) and (B) of Figure 6. These images are able to be output to image processing device 2. In (A) reference number 504 and in (B) reference number 505 represent the normalized rectangular regions of views 303 and 301, respectively.

In this embodiment, camera 1 includes wide-angle cameras for acquiring the front view, left/right views and rear view of the vehicle. The image displayed on image display device 3 is at least one of the following views: bird's-eye view, front side view, front lower view, rear side view and rear view. In this system having plural wide-angle cameras, it is possible to improve the image quality of the output image, and it is possible to provide images that can be better perceived by the driver.

As also shown in (B) of Figure 6, image processing device 2 cuts plural portions from the image taken by camera 1, followed by combining them to form a rectangular shape for assigning the image output range of camera 1. As a result, it is possible to improve the image quality and to provide images that can be better perceived by the driver.

According to the present invention, the image output range of the image pickup device can be adjusted corresponding to the contents of the image processing.

Consequently, the bandwidth of the image transfer means that connects the image processing device and the image pickup device can be used effectively.

The above-described embodiments have been described in order to allow easy understanding of the present invention and do not limit the present invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from on Japanese Patent Application No. 2005-108159, filed 5th April 2005, the contents of which are hereby incorporated by reference.

## Claims

1. An apparatus, for use with a vehicle, for generating an image comprising:
image pickup means for capturing images surrounding the vehicle and outputting the images with an adjustable image output range;
image processing means for receiving the output images and for image processing of the output images corresponding to the output range; and
display means for displaying the processed images.

2. An apparatus as claimed in claim 1, wherein the image output range comprises at least two ranges and wherein the image pickup means is arranged to output the captured images in accordance with one of the at least two ranges.

3. An apparatus as claimed in claim 1 or claim 2 wherein the image pickup means is switchable between a partial image mode and a full image mode.

4. An apparatus as claimed in any preceding claim wherein the image pickup means is arranged to adjust the image output range based on a signal external from the image pickup means.

5. An apparatus as claimed in any preceding claim wherein the image processing means is arranged to define the image output range using coordinates of four or more points.

6. An apparatus as claimed in any preceding claim wherein the image processing means is arranged to define the image output range with a rectangular shape and/or to normalize the captured images to a rectangular shape, the rectangular shape being the image for display on the display device.

7. An apparatus as claimed in any preceding claim wherein the image processed by the image processing means is a rectangular shape comprising a combination of a plurality of cut-out images from at least some of the captured images.

8. An apparatus as claimed in any preceding claim wherein said image pickup means comprises wide-angle cameras for capturing front views, left-side views, right-side views, and rear views of the vehicle and wherein the image processed by the image processing device is at least one of a bird's-eye view, a front side view, a front lower view, a rear side view and a rear view.

9. A method, for use with a vehicle, for generating an image comprising:
capturing images surrounding the vehicle;
outputting each of the captured images with an adjustable image output range;
processing the output images corresponding to the image output range; and
displaying at least one processed image.

10. A method as claimed in claim 9 comprising defining at least two image output ranges and using one of the at least two image output ranges for outputting each of the captured images.

11. A method as claimed in claim 9 or claim 10 wherein processing the output images corresponding to the image output range further comprises combining a plurality of cut-out images from at least some of the captured images in a single rectangular image; and wherein displaying the at least one processed image includes displaying the single rectangular image.

12. A method as claimed in any of claims 9 to 11 wherein capturing images surrounding the vehicle comprises operating a plurality of wide-angle cameras to capture a front view, a left-side view, a right-side view, and a rear view of the vehicle; and wherein displaying the at least one processed image includes displaying at least one of a bird's-eye view, a front side view, a front lower view, a rear side view and a rear view.

13. The A method as claimed in any of claims 9 to 12 wherein the adjustable image output comprises at least two ranges, the at least two ranges including a partial image range and a full image range.
